# EUROPÄISCHE PATENTSCHRIFT

(11) **EP 4 591 374 B1**
(45) Veröffentlichungstag und Bekanntmachung des Hinweises auf die Patenterteilung: **05.11.2025**
(21) Anmeldenummer: 24733064.0
(22) Anmeldetag: 08.05.2024
(51) Int. Cl.: H01M 8/04302, H01M 8/04664, H01M 8/249

(54) **KONTROLLVERFAHREN FÜR EINE KONTROLLE VON WENIGSTENS EINER ZENTRALEN KONDITIONIERVORRICHTUNG EINES BRENNSTOFFZELLENSYSTEMS**
INSPECTION METHOD FOR INSPECTING AT LEAST ONE CENTRAL TEMPERATURE-CONTROL DEVICE OF A FUEL CELL SYSTEM
PROCÉDÉ DE CONTRÔLE POUR LE CONTRÔLE D'AU MOINS UN DISPOSITIF DE CONDITIONNEMENT CENTRAL D'UN SYSTÈME DE PILES À COMBUSTIBLE

(30) Priorität: 09.05.2023 AT 503582023
(43) Veröffentlichungstag der Anmeldung: 30.07.2025
(73) Patentinhaber: AVL List GmbH, 8020 Graz (AT)
(72) Erfinder: RAMMER, Georg, 8047 Graz (AT)
(86) Internationale Anmeldenummer: PCT/AT2024/060194
(87) Internationale Veröffentlichungsnummer: WO 2024/229494

(56) Entgegenhaltungen:
- EP-B1- 2 130 259
- WO-A1-2019/110433
- DE-A1- 102009 036 435
- DE-A1- 102013 001 413

## Beschreibung

Die vorliegende Erfindung betrifft ein Kontrollverfahren für eine Kontrolle von wenigstens einer zentralen Konditionierungsvorrichtung eines Brennstoffzellensystems, eine Kontrollvorrichtung zur Durchführung eines solchen Kontrollverfahrens, ein Computerprogrammprodukt zur Durchführung eines solchen Verfahrens sowie ein Brennstoffzellensystem mit einer entsprechenden Kontrollvorrichtung.

Es ist bekannt, dass Brennstoffzellensysteme für die Erzeugung von elektrischem Strom insbesondere zwei oder mehr parallel geschaltete Brennstoffzellenstapel aufweisen. Dies beruht insbesondere auf der Tatsache, dass es konstruktive Grenzen gibt, wie viele Brennstoffzellen in einem einzigen Brennstoffzellenstapel kombiniert werden können. Um ein Brennstoffzellensystem entsprechend mit deutlich größerer Leistung, als aus einem einzigen Brennstoffzellenstapel zur Verfügung steht, vorsehen zu können, sind dementsprechend Brennstoffzellensysteme mit zwei oder mehr parallel geschalteten Brennstoffzellenstapel bekannt. DE 10 2009 036435 A1 beschreibt eine Versorgungsanordnung für ein Brennstoffzellenpack, wobei die Versorgungsanordnung strömungstechnisch zwischen einer Versorgungseinheit mit einem Versorgungsdruck und dem Brennstoffzellenpack mit einem Arbeitsdruck abgeordnet ist, mit einem ersten Druckminderer, welcher zur Absenkung des Versorgungsdrucks auf einen Vordruck oder einen Zwischendruck ausgebildet ist und mit einem Taktventil, welches zur weiteren Absenkung des Vordruckes auf den Arbeitsdruck ausgebildet ist.

Um die Komplexität bekannter Brennstoffzellenstapel klein zu halten, sind häufig zentrale Leitungssysteme und insbesondre Konditionierungsvorrichtungen vorgesehen, um zum Beispiel die Feuchtigkeit einer Zuluft, den Brennstoffgehalt, den Druck eines Brenngases oder ähnliche Parameter von Medien des Brennstoffzellenstapels einzustellen. Dadurch, dass dies nun zentral mittels zentraler Konditionierungsvorrichtungen damit gemeinsam für zwei oder mehr Brennstoffzellenstapel durchgeführt wird, muss für die Regelung ein Mittelwert berücksichtigt werden. So gehen bekannte Kontrollverfahren davon aus, dass die aktuellen Prozessparameter-Istwerte von den einzelnen Brennstoffzellenstapeln gemittelt werden und dieser gemeinsame Mittelwert dann im Vergleich einem Prozessparameter-Sollwert für das Erzeugen einer Stellvorgabe zugrunde gelegt werden. Die nachfolgende Regelung basiert auf einem Unterschied zwischen dem vorgegebenen Prozessparameter-Sollwert und dem Mittelwert der Prozessparameter-Istwerte.

Nachteilhaft bei der bekannten Lösung ist es, dass ein Mittelwert die unterschiedlich ausgeprägten Details der einzelnen Prozessparameter-Istwerte zum Teil nicht berücksichtigt. Insbesondere kann je nach Betriebssituation eine unterschiedlich starke Abweichung vom Mittelwert der Prozessparameter-Istwerte negative Folgen haben.

Dies wird üblicherweise dadurch berücksichtigt, dass immer der negativste Fall betrachtet wird und auf diese Weise das Kontrollverfahren zwar zu einem stabilen Betrieb des Brennstoffzellenbetriebs führt, jedoch nicht dem effizientesten Betrieb dieses Brennstoffzellensystems gewährleistet.

Es ist Aufgabe der vorliegenden Erfindung, die voranstehend beschriebenen Nachteile zumindest teilweise zu beheben. Insbesondere ist es Aufgabe der vorliegenden Erfindung, in kostengünstiger und einfacher Weise die Stabilität eines Betriebs eines Brennstoffzellensystems mit mehreren Brennstoffzellenstapeln zu verbessern.

Die voranstehende Aufgabe wird gelöst durch ein Kontrollverfahren mit den Merkmalen des Anspruchs 1, eine Kontrollvorrichtung mit den Merkmalen des Anspruchs 10, ein Computerprogrammprodukt mit den Merkmalen des Anspruchs 12 sowie ein Brennstoffzellensystem mit den Merkmalen des Anspruchs 13. Weitere Merkmale, und Details der Erfindung ergeben sich aus den Unteransprüchen, der Beschreibung und den Zeichnungen. Dabei gelten Merkmale und Details, die im Zusammenhang mit dem erfindungsgemäßen Kontrollverfahren beschrieben sind, selbstverständlich auch im Zusammenhang mit der erfindungsgemäßen Kontrollvorrichtung, dem erfindungsgemäßen Computerprogrammprodukt sowie dem erfindungsgemäßen Brennstoffzellensystem und jeweils umgekehrt, sodass bezüglich der Offenbarung zu den einzelnen Erfindungsaspekten stets wechselseitig Bezug genommen wird beziehungsweise werden kann.

Ein erfindungsgemäßes Kontrollverfahren dient einer Kontrolle von wenigstens einer zentralen Konditionierungsvorrichtung zum Konditionieren eines Medienstroms zu wenigstens zwei Brennstoffzellenstapeln eines Brennstoffzellensystems. Ein solches Kontrollverfahren zeichnet sich durch die folgenden Schritte aus:
- Vorgabe eines Prozessparameter-Sollwertes,
- Erfassen von Prozessparameter-Istwerten der wenigstens zwei Brennstoffzellenstapel,
- Bestimmen von Prozessparameter-Abweichungen als Differenz jedes erfassten Prozessparameter-Istwertes von dem vorgegebenen Prozessparameter-Sollwert,
- Vorgeben von Gewichtungen für die bestimmten Prozessparameter-Abweichungen,
- Erzeugen einer Prozessparameter-Summe auf Basis der Prozessparameter-Abweichungen und dazu vorgegebenen Gewichtungen,
- Ausgeben einer Stellvorgabe an die wenigstens eine zentrale Konditionierungsvorrichtung auf Basis der erzeugten Prozessparameter-Summe.

Ein erfindungsgemäßes Kontrollverfahren basiert auf dem grundsätzlichen Problem, ein komplexes Brennstoffzellensystem mit zwei oder mehr Brennstoffzellenstapeln zu steuern oder zu regeln. Der Begriff eines Kontrollierens beinhaltet dabei im Sinne der vorliegenden Erfindung sowohl eine Steuerung als auch eine Regelung.

Für eine bessere Übersichtlichkeit wird nachfolgend das Kontrollverfahren am Beispiel eines Prozessparameters in Form eines Temperaturwertes einer Kühlvorrichtung beschrieben. Bei diesem Beispiel handelt es sich also bei dem Prozessparameter zum Beispiel um die Rücklauftemperatur aus den einzelnen Brennstoffzellenstapeln. Eine Kühlvorrichtung kann einen Kühlkreislauf und eine Wärmesenke aufweisen, um eine Kühlflüssigkeit vorzukonditionieren und im gekühlten Zustand am Vorlauf jedes Brennstoffzellenstapels zur Verfügung zu stellen. Jeder Brennstoffzellenstapel hat je nach Betriebspunkt spezifische, zumindest leicht unterschiedliche tatsächliche Temperaturverhältnisse, sodass sich im Rücklauf der einzelnen Brennstoffzellenstapel jeweils leicht unterschiedliche Rücklauftemperaturen einstellen, welche anschließend wieder miteinander kombiniert als gemeinsamer Kühlmittelfluss der Wärmesenke zugeführt werden. Um nun ein entsprechendes erfindungsgemäßes Kontrollverfahren durchzuführen, kann als Prozessparameter-Sollwert eine definierte Rücklauftemperatur vorgegeben werden. Im Rahmen eines erfindungsgemäßen Verfahrens werden nun für alle Brennstoffzellenstapel bei diesem Beispiel die einzelnen Rücklauftemperaturen pro Brennstoffzellenstapel separat als Prozessparameter-Istwerte erfasst. Damit wird also für jeden Brennstoffzellenstapel ein Prozessparameter-Istwert in spezifischer Weise für den jeweils spezifischen Brennstoffzellenstapel erfassbar.

Im nächsten Schritt wird erfindungsgemäß für jeden erfassten Prozessparameter-Istwert eine Prozessparameter-Abweichung als Differenz dieses erfassten Prozessparameter-Istwert von dem vorgegebenen, gemeinsamen Prozessparameter-Sollwert bestimmt. Im Beispiel der Rücklauftemperatur in einer Kühlvorrichtung führt dies dazu, dass nun für jeden Brennstoffzellenstapel spezifisch eine Temperaturabweichung als Prozessparameter-Abweichung von der einen vorgegebenen Rücklauftemperatur als Prozessparameter-Sollwert bestimmbar ist. Im Beispiel ist es nun möglich, dass bei dem ersten der beiden Brennstoffzellenstapel die Prozessparameter-Abweichung 1°C beträgt, während sie bei dem zweiten Brennstoffzellenstapel 3°C beträgt. Hier ist gut zu erkennen, dass zwei sehr unterschiedliche Prozessparameter-Abweichungen nun im Kontrollverfahren weiter berücksichtigt werden, während bei bekannten Lösungen hier ausschließlich der Mittelwert von 2°C über beide Brennstoffzellenstapel bestimmt und der anschließenden Kontrolle zugrunde gelegt worden wäre.

Ein erfindungsgemäßes Kontrollverfahren bezieht nun in die Kontrollvorgänge zusätzlich zum Beispiel noch den Betriebspunkt des Brennstoffzellensystems mit ein. Jedoch sind auch andere Grundlagen für die Vorgabe der Gewichtungen denkbar, beispielsweise die Richtung der Abweichung, ob also der Prozessparameter-Istwert unterhalb oder oberhalb des Prozessparameter-Sollwertes liegt. Bei einer beispielshaften Verwendung des Betriebspunkts kann dieser die Lastsituation des Brennstoffzellensystems wiedergeben. So kann beispielsweise die aktuelle Lastanforderung, aber auch die aktuelle Stromerzeugung des Brennstoffzellensystems den Betriebspunkt darstellen. Auch indirekte oder dimensionslose Kennzahlen sind als Betriebspunkte grundsätzlich im Rahmen der vorliegenden Erfindung einsetzbar. Zusätzlich oder alternativ sind auch andere Betriebszustandsindikatoren als Basis für die Gewichtung denkbar, wie zum Beispiel Temperaturwerte, Druckwerte oder ähnliches.

Insbesondere ist beim erfindungsgemäßen Verfahren vorgesehen, dass abhängig von der Richtung der Abweichung gewichtet wird. So werden beispielsweise zwei Abweichungen gleich stark gewichtet, wenn beide entweder oberhalb oder unterhalb des Prozessparameter-Sollwertes liegen. Liegt allerdings einer von zwei Abweichungen oberhalb und der andere unterhalb des Prozessparameter-Sollwertes, dann müssen beide insbesondere unterschiedlich stark gewichtet werden. Die Gewichtung ist also bevorzugt von einer Prozessparameter-Abweichung abhängig.

Auf Basis dieses Betriebspunktes oder anderer Vorgaben können nun Gewichtungen vorgegeben werden, welche der bestimmten Prozessparameter-Abweichungen für diesen Betriebspunkt besonders wichtig oder besonders unwichtig sind. Beispielsweise kann es sein, dass bei hoher Lastsituation hohe Abweichungen für die Kontrollverfahren besonders berücksichtigt werden sollen, da sie bei einer hohen Lastsituation ansonsten Schädigungsmechanismen in den spezifischen Brennstoffzellenstapeln mit der hohen Abweichung verstärken können. Bei niedrigen Lastsituationen sind hohe Abweichungen möglicherweise weniger relevant, sodass entsprechend auch die Gewichtungen für höhere Prozessparameter-Abweichungen heruntergesetzt werden können. Im einfachsten Fall werden solche Gewichtungen auf Basis einer Gewichtungstabelle vorgegeben. Jedoch sind im Rahmen der vorliegenden Erfindung auch komplexere Vorgabemechanismen grundsätzlich denkbar.

Im finalen Schritt wird für die Kontrolle eine Prozessparameter-Summe erzeugt, welche auf Basis der Prozessparameter-Abweichungen und den dazugehörigen Gewichtungen beruht. Im einfachsten Fall ist dies die Multiplikation der jeweiligen Gewichtung mit jeder spezifischen Prozessparameter-Abweichung und der Aufsummierung dieser einzelnen Produkte. Dies führt dazu, dass die Prozessparameter-Summe nun insbesondere ebenfalls eine Art Durchschnitt darstellt, jedoch nicht ein ausgeglichenen Mittelwert, sondern vielmehr einen gewichteten Durchschnitt, welcher je nach Betriebssituation unterschiedliche Prozessparameter-Abweichungen stärker oder weniger stark gewichtet.

Im allerletzten Schritt wird nun auf Basis dieser Prozessparameter-Summe eine Stellvorgabe an die zentrale Konditionierungsvorrichtung ausgegeben. Im vorliegenden Beispiel einer Rücklauftemperatur eines Kühlmittels kann zum Beispiel in der aktuellen Betriebssituation mit hoher Last die höhere Abweichung stärker gewichtet werden, da ein Ausbrechen aus vorgegebenen Temperaturgrenzen mögliche und mit der Temperaturabweichung einhergehende Schädigungsmechanismen mit hoher Sicherheit vermieden werden soll. In einem solchen Fall könnte zum Beispiel die Gewichtung der früheren Prozessparameter-Abweichung auf 1 gesetzt werden und die Gewichtung der niedrigeren Prozessparameter-Abweichung ausgeschaltet und damit auf 0 gesetzt werden. Damit würde sich eine Prozessparameter-Summe von 0 x 1°C + 1 x 3°C ergeben, und die Prozessparameter-Summe sich als 3°C einstellen. Die Kontrollschleife und damit die zentrale Konditionierungsvorgabe würde nun eine Stellvorgabe erhalten, um diesen gewichteten Durchschnitt von 3°C so auszugleichen, dass in der Folge der Prozessparameter-Sollwert von der Prozessparameter-Summe beim nächsten Durchlauf des Kontrollverfahrens eingehalten wird. Bei diesem Beispiel könnte also zum Beispiel bei zu hohen Ausgangstemperaturen von hier in der Prozessparameter-Summe 3°C die Wärmesenke entsprechend kühler gestellt werden, um auf diese Weise eine niedrigere Vorlauftemperatur des Kühlmittels zur Verfügung zu stellen.

Wie aus der voranstehenden Erläuterung erkennbar wird, bringt ein erfindungsgemäßes Kontrollverfahren nun im Wesentlichen zwei Hauptvorteile mit sich. Zum einen ist es möglich, dass kein einfaches Ausmitteln aller Brennstoffzellenstapel mehr erforderlich ist, sondern vielmehr spezifisch auf die unterschiedlich stark ausgeprägten Prozessparameter-Abweichungen in einem komplexen mehrstapeligen Brennstoffzellensystem eingegangen werden kann. Dieses Eingehen auf unterschiedliche quantitativ ausgeprägte Prozessparameter-Abweichungen erfolgt darüber hinaus als zweiter Vorteil selektiv auf Basis der jeweiligen Betriebssituation und äußert sich durch unterschiedlich gelagerte Gewichtungen, in Abhängigkeit dieser Betriebssituation. Dies führt zum einen dazu, dass ein schnellerer Kontrollerfolg und damit eine verbesserte Regelgenauigkeit und Kontrollgeschwindigkeit erzielt werden kann. In indirekter Weise führt dies zu einem stabileren Betrieb des Brennstoffzellensystems, schnellerer Kontrollgeschwindigkeit und damit zu einer gesteigerten Effizienz in der Betriebsweise des Brennstoffzellensystems.

Weiter von Vorteil kann es sein, wenn bei einem erfindungsgemäßen Kontrollverfahren zusätzlich die folgenden Schritte durchgeführt werden:
- Erkennen eines Betriebspunktes des Brennstoffzellensystems,
- Vorgeben von Gewichtungen für die bestimmten Prozessparameter-Abweichungen auf Basis des erkannten Betriebspunktes.

Wie bereits weiter oben als Beispiel erläutert, kann die Verwendung des Betriebspunktes des Brennstoffzellensystems eine mögliche Basis für die Vorgabe des Betriebspunktes bieten. Diese Variante kann auch mit anderen Grundlagen, wie beispielsweise die Richtung der Abweichungen als kombinierte Basis für die Vorgabe der Gewichtungen eingesetzt werden.

Es kann Vorteile mit sich bringen, wenn bei einem erfindungsgemäßen Kontrollverfahren die Gewichtungen zwischen den Grenzen 1,0 und 0,0 vorgegeben werden. Zum einen erlaubt dies, dass die Prozessparameter-Summe damit einen gewichteten Durchschnittswert darstellt, welcher direkt einer bestehenden Kontrollschleife einer Konditionierungsvorrichtung zugrunde gelegt werden kann. Dadurch, dass bei dieser Ausführungsform die Grenzen der Gewichtungen die Endpunkte 1,0 und 0,0 einschließen, können einzelne Prozessparameter-Abweichungen vollständig ausgestaltet oder vollständig eingeschaltet werden. Dies führt zu einer weiteren Verbesserung eines erfindungsgemäßen Kontrollverfahrens hinsichtlich der gewünschten Stabilitätssteigerung im Betrieb des Brennstoffzellensystems.

Darüber hinaus ist es von Vorteil, wenn bei einem erfindungsgemäßen Kontrollverfahren diese Summe der vorgegebenen Gewichtungen unabhängig von dem erkannten Betriebspunkt konstant oder im Wesentlichen konstant sind. Auch hier ist die Summe vorzugsweise 1,0. Das Konstanthalten der Gewichtungen führt zu einer konstanten Regelgeschwindigkeit, sodass insbesondere die Stabilität unabhängig vom Betriebspunkt für alle Regelungen gleich beibehalten werden kann. Die Konstanthaltung kann dabei mit einer Abweichung von einem zulässigen Wert von zum Beispiel 5% ausgestaltet sein.

Weitere Vorteile kann es mit sich bringen, wenn bei einem erfindungsgemäßen Kontrollverfahren die Gewichtung bei einem Betriebspunkt mit niedriger Lastsituation niedrigere Prozessparameter-Abweichungen stärker gewichtet und bei einem Betriebspunkt mit hoher Lastsituation höhere Prozessparameter-Abweichungen stärker gewichtet. Dazwischenliegende Lastsituationen können eine gleiche oder im wesentliche gleiche Gewichtungsverteilung aufweisen. Diese Ausbildung erlaubt es, dass insbesondere bei hoher Last als Betriebspunkt am Brennstoffzellensystem entsprechend höhere Prozessparameter-Abweichungen stärker in das Kontrollverfahren einfließen und somit die Regelungsgrößen und damit die Stellvorgänge stärker ausfallen als bei einem Mittelungsverfahren gemäß dem Stand der Technik. Je niedriger die Lastsituation ist, umso stärker werden niedrigere Prozessparameter-Abweichungen gewichtet, sodass entsprechend bei weniger anfälligen und damit weniger instabilen Betriebssituationen des Brennstoffzellensystem ein geringerer Kontrolleingriff als ausreichend erachtet wird. Wie bereits erläutert worden ist, kann die Vorgabe der Gewichtungen mittels einer Gewichtungstabelle erfolgen. Für Zwischenpunkte, welche nicht Teil einer solchen Tabellenvorgabe sind, ist eine Interpolation zwischen den benachbarten Punkten denkbar.

Weiter von Vorteil ist es darüber hinaus, wenn bei einem erfindungsgemäßen Kontrollverfahren wenigstens einer der folgenden Prozessparameter verwendet wird:
- Temperatur eines Medienstroms,
- Druck eines Medienstroms,
- Massenstrom eines Medienstroms,
- Relative Feuchte des Medienstroms.

Bei der voranstehenden Aufzählung handelt es sich um eine nicht abschließende Liste. Selbstverständlich kann das Kontrollverfahren auch zwei oder mehr Prozessparameter in kombinierter Weise oder als separate Kontrollschleifen miteinander kombinieren. Auch sind unterschiedliche Konditionierungsvorrichtungen mit unterschiedlichen Prozessparametern in einem erfindungsgemäßen Kontrollverfahren grundsätzlich kombinierbar.

Weitere Vorteile sind ebenfalls erzielbar, wenn bei einem erfindungsgemäßen Kontrollverfahren die Erfassung der Prozessparameter-Istwerte für wenigstens drei Brennstoffzellenstapel durchgeführt wird, wobei die erfassten Prozessparameter-Abweichungen immer paarweise den weiteren Verfahrensschritten unterzogen werden und abschließend die Prozessparameter-Summe auf Basis einer Multiplikation der einzelnen paarweisen Prozessparameter-Summen erzeugt wird. Damit erzeugt sozusagen eine kombinatorische Korrelation der paarweisen Zusammensetzung der Brennstoffzellenstapel eine Betrachtungsweise für noch komplexere Brennstoffzellensysteme und damit die Möglichkeit, das gleiche einfache und optimierte Kontrollverfahren auch auf solche komplexen Brennstoffzellensysteme anwenden zu können.

Ebenfalls bringt es Vorteile mit sich, wenn bei einem erfindungsgemäßen Kontrollverfahren bei der Bestimmung der Prozessparameter-Abweichungen die qualitative Richtung der Abweichung für die weiteren Verfahrensschritte unberücksichtigt bleibt. Die Ausrichtung der Abweichung, also eine Abweichung oberhalb oder unterhalb des Prozessparameter-Sollwerts ist damit grundsätzlich unerheblich hinsichtlich der Ausbildung des gewichteten Durchschnitts. Aus algorithmischer Sicht kann dies durch die Verwendung des mathematischen Betrages für die jeweilige Prozessparameter-Abweichung zur Verfügung gestellt werden. Das Kontrollverfahren fokussiert sich also auf die quantitativen Werte, ohne deren qualitative Ausrichtung zu berücksichtigen.

Ebenfalls von Vorteil ist es weiter, wenn bei einem erfindungsgemäßen Kontrollverfahren wenigstens eines der folgenden Medien betrachtet wird:
- Kathodenzuführgas,
- Anodenzuführgas,
- Rezirkulationsgas,
- Kühlflüssigkeit.

Bei der voranstehenden Aufzählung handelt es sich um eine nicht abschließende Liste. Selbstverständlich kann das erfindungsgemäße Verfahren auch für unterschiedliche Kombinationen von kontrollierten Medien gemeinsam eingesetzt werden.

Darüber hinaus ist es ein Gegenstand der vorliegenden Erfindung, eine Kontrollvorrichtung zur Verfügung zu stellen, für eine Kontrolle von wenigstens einer zentralen Konditionierungsvorrichtung zum Konditionieren eines Medienstroms zu wenigstens zwei Brennstoffzellenstapeln eines Brennstoffzellensystem. Eine solche Kontrollvorrichtung weist ein Vorgabemodul zur Vorgabe eines Prozessparameter-Sollwertes auf. Weiter ist ein Erfassungsmodul zum Erfassen von Prozessparameter-Istwerten der wenigstens zwei Brennstoffzellenstapel vorgesehen. Mit Hilfe eines Bestimmungsmoduls erfolgt ein Bestimmen von Prozessparameter-Abweichungen als Differenz jedes erfassten Prozessparameter-Istwerts von dem vorgegebenen Prozessparameter-Sollwert. Mit Hilfe eines Gewichtungsmoduls können Gewichtungen vorgegeben werden für die bestimmten Prozessparameter-Abweichungen. Darüber hinaus ist ein Erzeugungsmodul vorgesehen zum Erzeugen einer Prozessparameter-Summe auf Basis der Prozessparameter-Abweichungen und dazu vorgegebenen Gewichtungen. Final dient ein Ausgabemodul dazu, eine Stellvorgabe an die wenigstens eine zentrale Konditionierungsvorrichtung auf Basis der erzeugten Prozessparameter-Summe auszugeben. Das Vorgabemodul, das Erfassungsmodul, das Bestimmungsmodul, das Gewichtungsmodul, das Erzeugungsmodul und/oder das Ausgabemodul sind für eine Ausführung eines erfindungsgemäßen Kontrollverfahrens ausgebildet. Damit bringt auch eine erfindungsgemäße Kontrollvorrichtung die gleichen Vorteile mit sich, wie sie ausführlich mit Bezug auf ein erfindungsgemäßen Kontrollverfahren erläutert worden sind.

Weiter von Vorteil ist es, wenn bei einer erfindungsgemäßen Kontrollvorrichtung weiter ein Erkennungsmodul vorgesehen ist zum Erkennen eines Betriebspunktes des Brennstoffzellensystems und das Gewichtungsmodul zum Vorgeben von Gewichtungen für die bestimmten Prozessparameter-Abweichungen auf Basis des erkannten Betriebspunktes (BP) dient.

Darüber hinaus ist Gegenstand der vorliegenden Erfindung ein Computerprogrammprodukt, aufweisend Befehle, welche bei der Ausführung durch einen Computer dieses veranlassen, die Schritte eines erfindungsgemäßen Kontrollverfahrens durchzuführen. Damit bringt auch ein erfindungsgemäßes Computerprogrammprodukt die gleichen Vorteile mit sich, wie sie ausführlich mit Bezug auf ein erfindungsgemäßes Kontrollverfahren erläutert worden sind.

Ein weiterer Gegenstand der vorliegenden Erfindung ist ein Brennstoffzellensystem zur Erzeugung von elektrischem Strom, aufweisend wenigstens zwei Brennstoffzellenstapel mit jeweils einer Kühlvorrichtung, einem Anodenabschnitt und einem Kathodenabschnitt. Jeder Anodenabschnitt ist mit einem Anodenzuführabschnitt zum Zuführen von Anodenzuführgas und einem Anodenabführabschnitt zum Abführen von Anodenabgas ausgestattet. Jeder Kathodenabschnitt weist einen Kathodenzuführabschnitt zum Zuführen von Kathodenzuführgas und einen Kathodenabführabschnitt zum Abführen von Kathodenabgas auf. Ein erfindungsgemäßes Brennstoffzellensystem zeichnet sich dadurch aus, dass für die Anodenzuführabschnitte, die Kathodenzuführabschnitte und/oder die Kühlvorrichtung wenigstens eine zentrale Konditionierungsvorrichtung für ein Konditionieren eines Medienstroms vorgesehen ist und eine Kontrollvorrichtung gemäß der vorliegenden Erfindung aufweist. Damit bringt auch ein erfindungsgemäßes Brennstoffzellensystem die gleichen Vorteile mit sich, wie sie ausführlich mit Bezug auf ein erfindungsgemäßes Kontrollverfahren erläutert worden sind.

Weitere Vorteile, Merkmale und Einzelheiten der Erfindung ergeben sich aus der nachfolgenden Beschreibung, in der unter Bezugnahme auf die Zeichnungen Ausführungsbeispiele der Erfindung im Einzelnen beschrieben sind. Es zeigen schematisch:
- Fig. 1: eine Ausführungsform eines erfindungsgemäßen Brennstoffzellensystems,
- Fig. 2: eine weitere Ausführungsform eines erfindungsgemäßen Brennstoffzellensystems,
- Fig. 3: eine Ausführungsform einer erfindungsgemäßen Kontrollvorrichtung.

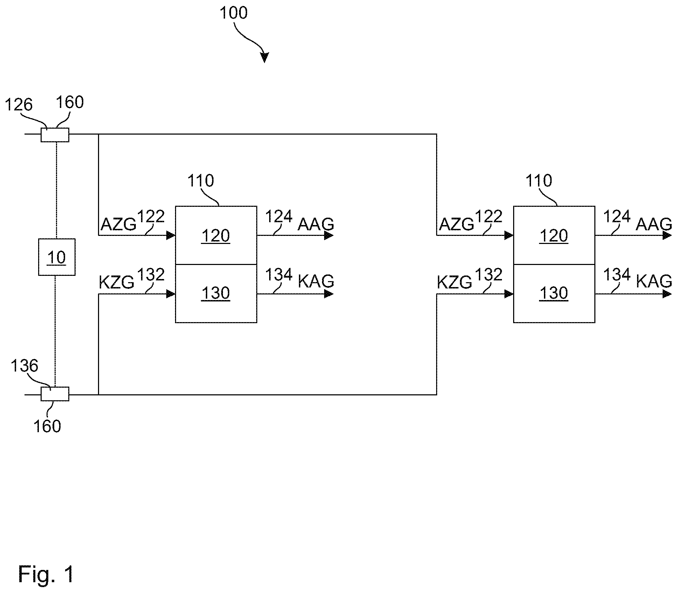

Figur 1 zeigt schematisch ein Brennstoffzellensystem 100 mit zwei Brennstoffzellenstapeln 110, welche zum Beispiel elektrisch seriell geschaltet sind. Jeder Brennstoffzellenstapel 110 ist mit einem Anodenabschnitt 120 und einem Kathodenabschnitt 130 ausgestattet. Anodenzuführgas AZG wird für beide Brennstoffzellenstapel 110 über jeweils einen Anodenzuführabschnitt 122 dem Anodenabschnitt 120 zugeführt und entsprechend entstandenes Anodenabgas AAG jeweils spezifisch über Anodenabführabschnitte 124 abgeführt. In ähnlicher Weise erfolgt ein Zuführen von Kathodenzuführgas KZG spezifisch über einen Kathodenzuführabschnitt 132 zu den jeweiligen Kathodenabschnitten 130 der beiden Brennstoffzellenstapel 110. Das entstandene Kathodenabgas KAG wird ebenfalls wieder spezifisch für jeden Brennstoffzellenstapel 110 über die jeweiligen Kathodenabführabschnitte 134 abgeführt.

Wie es die Figur 1 zeigt, ist hier im Anodenzuführabschnitt 122 zentral eine Gaskonditionierungsvorrichtung 126 als Konditionierungsvorrichtung 160 für das Anodenzuführgas AZG vorgesehen. Ähnlich ist eine Gebläsevorrichtung 136 als Konditionierungsvorrichtung 160 zentral für das Kathodenzuführgas KZG für beide Brennstoffzellenstapel 110 vorgesehen. Um ein erfindungsgemäßes Kontrollverfahren durchzuführen, kann eine gemeinsame Kontrollvorrichtung 10, aber auch separate Kontrollvorrichtungen 10, hier das Kontrollverfahren für diese Konditionierungsvorrichtung 160 durchführen.

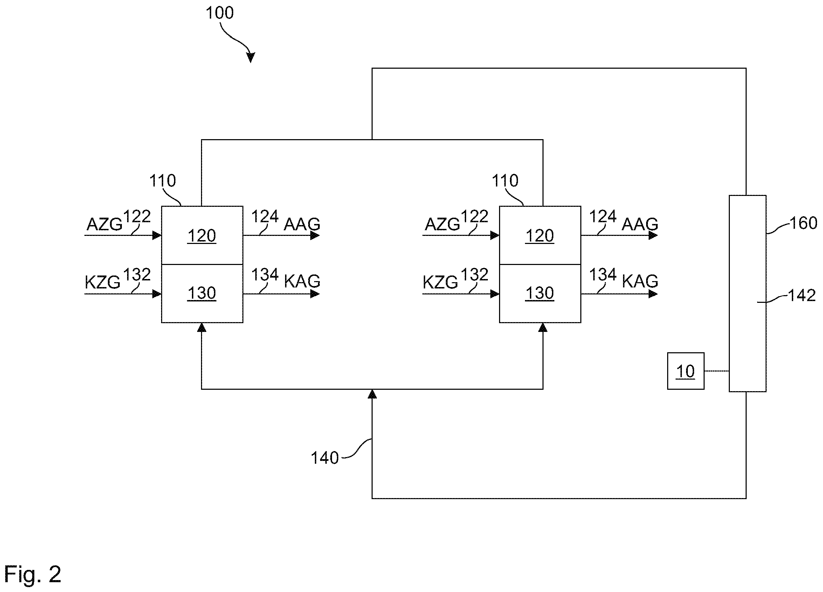

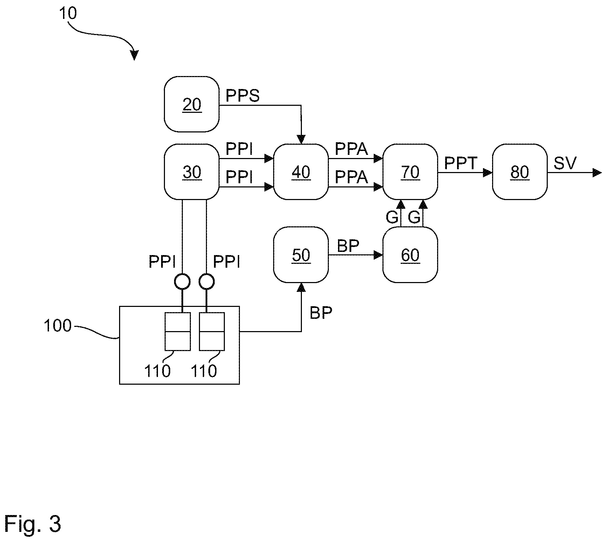

Die Figur 2 zeigt eine alternative Lösung eines Brennstoffzellensystems 100, bei welchem die Kontrollvorrichtung 10 für eine Kühlvorrichtung 140 verwendet wird. Die Kühlung erfolgt hier durch einen Kreislauf, wobei Kühlfluid in einer Wärmesenke 142 als Konditionierungsvorrichtung 160 konditioniert werden kann. Entsprechend gekühltes Kühlfluid kann über die Kühlvorrichtung 140 auf die beiden Brennstoffzellenstapel 110 aufgeteilt werden und dort als gekühlte Vorlauftemperatur zur Verfügung stehen. Wie bereits im Beispiel in der allgemeinen Beschreibung erläutert, wird je nach aktueller Betriebssituation im Brennstoffzellenstapel 110 das jeweilige Kühlfluid unterschiedlich stark erwärmt, sodass sich unterschiedliche Rücklauftemperaturen einstellen, die anschließend zusammengeführt wieder der gemeinsamen zentralen Konditionierungsvorrichtung 160 als Wärmesenke 142 zugeführt werden. Auch hier dient eine Kontrollvorrichtung 10, wie sie beispielsweise in der Figur 3 später erläutert wird, der Kontrolle der Konditionierung des Medienstroms hier in Form des Kühlfluids.

Die Figur 3 zeigt schematisch an einer Kontrollvorrichtung 10 wie ein erfindungsgemäßes Kontrollverfahren ablaufen kann. Mit Hilfe eines Vorgabemoduls 20 kann je nach Betriebssituation ein Prozessparameter-Sollwert PPS vorgegeben werden. Um einen Vergleich mit der Ist-Situation durchführen zu können, können die Prozessparameter-Istwerte PPI spezifisch an jedem Brennstoffzellenstapel 110 über entsprechende Sensoren im Brennstoffzellensystem 100 bestimmt werden. Alternativ zu Sensoren ist auch eine modellbasierte Bestimmung denkbar. Dies erfolgt über das Erfassungsmodul 30, welches diese spezifischen Prozessparameter-Istwerte PPI an das Bestimmungsmodul 40 weitergibt.

Parallel erfolgt nun mit Hilfe eines Erkennungsmoduls 50 eine Erkennung des Betriebspunktes BP des Brennstoffzellensystems 100. Dieser Betriebspunkt BP kann nun weitergegeben werden an das Gewichtungsmodul 60 und auf diese Weise werden Gewichtungen G an das Erzeugungsmodul 70 basierend auf diesem Betriebspunkt BP vorgegeben. Ausgehend dem Bestimmungsmodul 40 kann durch den spezifischen Vergleich der spezifischen Prozessparameter-Istwerte PPI mit dem allgemein vorgegebenen Prozessparameter-Sollwert PPS spezifische Prozessparameter-Abweichungen PPA für jeden Brennstoffzellenstapel 110 erzeugt werden. Die spezifischen Prozessparameter-Abweichungen PPA werden nun im Erzeugungsmodul 70 mit den spezifisch für den Betriebspunkt BP vorgegebenen Gewichtungen G gewichtet und eine Prozessparameter-Summe PPT ausgegeben.

Die Ausgabe erfolgt über ein Ausgabemodul 80 in Form einer Stellvorgabe SV an die Konditionierungsvorrichtung 160, also zum Beispiel in Form einer Vorgabe, einer reduzierten Temperatur an der Wärmesenke, um das Kühlfluid an einer Kühlvorrichtung weiter zu kühlen und entsprechend die gewünschte stärkere Kühlfunktionalität über alle Brennstoffzellenstapel 110 hinweg zur Verfügung stellen zu können.

Die voranstehende Erläuterung der Ausführungsformen beschreibt die vorliegende Erfindung ausschließlich im Rahmen von Beispielen.

### Bezugszeichenliste

- 10: Kontrollvorrichtung
- 20: Vorgabemodul
- 30: Erfassungsmodul
- 40: Bestimmungsmodul
- 50: Erkennungsmodul
- 60: Gewichtungsmodul
- 70: Erzeugungsmodul
- 80: Ausgabemodul

- 100: Brennstoffzellensystem
- 110: Brennstoffzellenstapel
- 120: Anodenabschnitt
- 122: Anodenzuführabschnitt
- 124: Anodenabführabschnitt
- 126: Gaskonditionierungsvorrichtung
- 130: Kathodenabschnitt
- 132: Kathodenzuführabschnitt
- 134: Kathodenabführabschnitt
- 136: Gebläsevorrichtung
- 140: Kühlvorrichtung
- 142: Wärmesenke
- 150: Rezirkulationsabschnitt
- 160: Konditionierungsvorrichtung

- AZG: Anodenzuführgas
- AAG: Anodenabgas
- KZG: Kathodenzuführgas
- KAG: Kathodenabgas
- RZG: Rezirkulationsgas

- PPS: Prozessparameter-Sollwert
- PPI: Prozessparameter-Istwert
- PPA: Prozessparameter-Abweichung
- PPT: Prozessparameter-Summe
- BP: Betriebspunkt
- G: Gewichtung
- SV: Stellvorgabe

## Patentansprüche

1. Kontrollverfahren für eine Kontrolle von wenigstens einer zentralen Konditionierungsvorrichtung (160) zum Konditionieren eines Medienstroms zu wenigstens zwei Brennstoffzellenstapeln (110) eines Brennstoffzellensystems (100), **gekennzeichnet durch** die folgenden Schritte:
- Vorgabe eines Prozessparameter-Sollwertes (PPS),
- Erfassen von Prozessparameter-Istwerten (PPI) der wenigstens zwei Brennstoffzellenstapel (110),
- Bestimmen von Prozessparameter-Abweichungen (PPA) als Differenz jedes erfassten Prozessparameter-Istwertes (PPI) von dem vorgegebenen Prozessparameter-Sollwert (PPS),
- Vorgeben von Gewichtungen (G) für die bestimmten Prozessparameter-Abweichungen (PPA), Erzeugen einer Prozessparameter-Summe (PPT) auf Basis der Prozessparameter-Abweichungen (PPA) und dazu vorgegebenen Gewichtungen (G),
- Ausgeben einer Stellvorgabe (SV) an die wenigstens eine zentrale Konditionierungsvorrichtung (160) auf Basis der erzeugten Prozessparameter-Summe (PPT).

2. Kontrollverfahren nach Anspruch 1, zusätzlich die folgenden Schritte durchgeführt werden:
- Erkennen eines Betriebspunktes (BP) des Brennstoffzellensystems (100),
- Vorgeben von Gewichtungen (G) für die bestimmten Prozessparameter-Abweichungen (PPA) auf Basis des erkannten Betriebspunktes (BP).

3. Kontrollverfahren nach einem der vorangegangenen Ansprüche, **dadurch gekennzeichnet, dass** die Gewichtungen (G) zwischen den Grenzen 1,0 und 0,0 vorgegeben werden.

4. Kontrollverfahren nach einem der vorangegangenen Ansprüche, **dadurch gekennzeichnet, dass** die Summe der vorgegebenen Gewichtungen (G) unabhängig von dem erkannten Betriebspunkt (BP) konstant oder im Wesentlichen konstant sind.

5. Kontrollverfahren nach einem der vorangegangenen Ansprüche, **dadurch gekennzeichnet, dass** die Gewichtungen (G) bei einem Betriebspunkt (BP) mit niedriger Lastsituation niedrigere Prozessparameter-Abweichungen (PPA) stärker gewichten und bei einem Betriebspunkt (BP) mit hoher Lastsituation höhere Prozessparameter-Abweichungen (PPA) stärker gewichten.

6. Kontrollverfahren nach einem der vorangegangenen Ansprüche, **dadurch gekennzeichnet, dass** wenigstens einer der folgenden Prozessparameter verwendet wird:
- Temperatur eines Medienstroms
- Druck eines Medienstroms
- Massenstrom eines Medienstroms
- Relative Feuchte des Medienstroms

7. Kontrollverfahren nach einem der vorangegangenen Ansprüche, **dadurch gekennzeichnet, dass** die Erfassung der Prozessparameter-Istwerte (PPI) für wenigstens drei Brennstoffzellenstapel (110) durchgeführt wird, wobei die erfassten Prozessparameter-Abweichungen (PPA) immer paarweise den weiteren Verfahrensschritten unterzogen werden und abschließend die Prozessparameter-Summe (PPT) auf Basis einer Multiplikation der einzelnen, paarweisen Prozessparameter-Summen (PPT) erzeugt wird.

8. Kontrollverfahren nach einem der vorangegangenen Ansprüche, **dadurch gekennzeichnet, dass** bei der Bestimmung der Prozessparameter-Abweichungen (PPA) die qualitative Richtung der Abweichung für die weiteren Verfahrensschritte unberücksichtigt bleibt.

9. Kontrollverfahren nach einem der vorangegangenen Ansprüche, **dadurch gekennzeichnet, dass** wenigstens eines der folgenden Medien betrachten wird:
- Anodenzuführgas (AZG)
- Kathodenzuführgas (KZG)
- Rezirkulationsgas (RZG)
- Kühlflüssigkeit

10. Kontrollvorrichtung (10) für eine Kontrolle von wenigstens einer zentralen Konditionierungsvorrichtung (160) zum Konditionieren eines Medienstroms zu wenigstens zwei Brennstoffzellenstapeln (110) eines Brennstoffzellensystems (100), **gekennzeichnet durch** ein Vorgabemodul (20) zur Vorgabe eines Prozessparameter-Sollwertes (PPS), ein Erfassungsmodul (30) zum Erfassen von Prozessparameter-Istwerten (PPI) der wenigstens zwei Brennstoffzellenstapel (110), ein Bestimmungsmodul (40) zum Bestimmen von Prozessparameter-Abweichungen (PPA) als Differenz jedes erfassten Prozessparameter-Istwertes (PPI) von dem vorgegebenen Prozessparameter-Sollwert (PPS), ein Gewichtungsmodul (60) zum Vorgeben von Gewichtungen (G) für die bestimmten Prozessparameter-Abweichungen (PPA), ein Erzeugungsmodul (70) zum Erzeugen einer Prozessparameter-Summe (PPT) auf Basis der Prozessparameter-Abweichungen (PPA) und dazu vorgegebenen Gewichtungen (G) und ein Ausgabemodul (80) um Ausgeben einer Stellvorgabe (SV) an die wenigstens eine zentrale Konditionierungsvorrichtung (160) auf Basis der erzeugten Prozessparameter-Summe (PPT), wobei das Vorgabemodul (20), das Erfassungsmodul (30), das Bestimmungsmodul (40), das Gewichtungsmodul (60), das Erzeugungsmodul (70) und/oder das Ausgabemodul (80) für eine Ausführung eine Kontrollverfahrens mit den Merkmalen eines der Ansprüche 1 bis 9 ausgebildet sind.

11. Kontrollvorrichtung (10) nach Anspruch 10, **dadurch gekennzeichnet, dass** weiter ein Erkennungsmodul (50) vorgesehen ist zum Erkennen eines Betriebspunktes (BP) des Brennstoffzellensystems (100) und das Gewichtungsmodul (60) zum Vorgeben von Gewichtungen (G) für die bestimmten Prozessparameter-Abweichungen (PPA) auf Basis des erkannten Betriebspunktes (BP) dient.

12. Computerprogrammprodukt, aufweisend Befehle, welche bei der Ausführung durch einen Computer diesen veranlassen die Schritte eines Kontrollverfahrens mit Merkmalen eines der Ansprüche 1 bis 9auszuführen.

13. Brennstoffzellensystem (100) zur Erzeugung von elektrischem Strom, aufweisend wenigstens zwei Brennstoffzellenstapel (110) mit jeweils einer Kühlvorrichtung (140), einem Anodenabschnitt (120) und einem Kathodenabschnitt (130), wobei jeder Anodenabschnitt (120) einen Anodenzuführabschnitt (122) zum Zuführen von Anodenzuführgas (AZG) und einen Anodenabführabschnitt (124) zum Abführen von Anodenabgas (AAG) aufweist, wobei weiter jeder Kathodenabschnitt (130) einen Kathodenzuführabschnitt (132) zum Zuführen von Kathodenzuführgas (KZG) und einen Kathodenabführabschnitt (134) zum Abführen von Kathodenabgas (KAG) aufweist, **dadurch gekennzeichnet, dass** für die Anodenzuführabschnitte (122), die Kathodenzuführabschnitte (132) und/oder die Kühlvorrichtung (140) wenigstens eine zentrale Konditionierungsvorrichtung (160) für ein Konditionieren eines Medienstroms vorgesehen ist und eine Kontrollvorrichtung (10) mit den Merkmalen des Anspruchs 10 oder 11 aufweist.

## Claims

1. Control method for controlling at least one central conditioning device (160) for conditioning a media flow to at least two fuel cell stacks (110) of a fuel cell system (100), **characterized by** the following steps:
- specifying a process parameter setpoint (PPS),
- detecting actual process parameter values (PPI) of the at least two fuel cell stacks (110),
- determining process parameter deviations (PPA) as the difference between each detected actual process parameter value (PPI) and the specified process parameter setpoint (PPS),
- specifying weightings (G) for the determined process parameter deviations (PPA), generating a process parameter sum (PPT) based on the process parameter deviations (PPA) and the specified weightings (G),
- outputting a control command (SV) to the at least one central conditioning device (160) based on the generated process parameter sum (PPT).

2. Control method according to claim 1, wherein the following steps are additionally performed:
- detecting an operating point (BP) of the fuel cell system (100),
- specifying weightings (G) for the determined process parameter deviations (PPA) on the basis of the detected operating point (BP).

3. Control method according to one of the preceding claims, **characterized in that** the weightings (G) are specified between the limits 1.0 and 0.0.

4. Control method according to one of the preceding claims, **characterized in that** the sum of the predetermined weightings (G) is constant or essentially constant regardless of the detected operating point (BP).

5. Control method according to one of the preceding claims, **characterized in that** the weightings (G) at an operating point (BP) with a low load situation give greater weight to lower process parameter deviations (PPA) and at an operating point (BP) with a high load situation give greater weight to higher process parameter deviation

6. Control method according to one of the preceding claims, **characterized in that** at least one of the following process parameters is used:
- temperature of a media flow
- pressure of a media flow
- mass flow of a media flow
- relative humidity of the media flow.

7. Control method according to one of the preceding claims, **characterized in that** the actual process parameter values (PPI) are recorded for at least three fuel cell stacks (110), whereby the recorded process parameter deviations (PPA) are always subjected pairwise to the further process steps and, finally, the process parameter sum (PPT) is generated on the basis of a multiplication of the individual, pairwise process parameter sums (PPT).

8. Control method according to one of the preceding claims, **characterized in that** when determining the process parameter deviations (PPA), the qualitative direction of the deviation is disregarded for the subsequent process steps.

9. Control method according to one of the preceding claims, **characterized in that** at least one of the following media is considered:
- anode feed gas (AZG)
- cathode feed gas (KZG)
- recirculation gas (RZG)
- cooling liquid.

10. A control device (10) for controlling at least one central conditioning device (160) for conditioning a media flow to at least two fuel cell stacks (110) of a fuel cell system (100), **characterized by** a specification module (20) for specifying a process parameter setpoint (PPS), a detection module (30) for detecting actual process parameter values (PPI) of the at least two fuel cell stacks (110), a determination module (40) for determining process parameter deviations (PPA) as the difference between each detected actual process parameter value (PPI) and the specified process parameter setpoint (PPS), a weighting module (60) for specifying weights (G) for the determined process parameter deviations (PPA), and a generation module (70) for generating a process parameter sum (PPT) based on the process parameter deviations (PPA) and weightings (G) specified therefore, and an output module (80) for outputting a control specification (SV) to the at least one central conditioning device (160) based on the generated process parameter sum (PPT), wherein the specification module (20), the detection module (30), the determination module (40), the weighting module (60), the generation module (70) and/or the output module (80) are configured for executing a control method having the features of one of claims 1 to 9.

11. Control device (10) according to claim 10, **characterized in that** a detection module (50) is further provided for detecting an operating point (BP) of the fuel cell system (100), and the weighting module (60) serves to specify weights (G) for the determined process parameter deviations (PPA) based on the detected operating point (BP).

12. A computer program product comprising instructions which, when executed by a computer, cause the computer to perform the steps of a control method having features of any of claims 1 to 9.

13. A fuel cell system (100) for generating electrical power, comprising at least two fuel cell stacks (110), each having a cooling device (140), an anode section (120), and a cathode section (130), wherein each anode section (120) has an anode supply section (122) for supplying anode supply gas (AZG) and an anode discharge section (124) for discharging anode exhaust gas (AAG), wherein each cathode section (130) further has a cathode supply section (132) for supplying cathode supply gas (KZG) and a cathode discharge section (134) for discharging cathode exhaust gas (KAG), **characterized in that** for the anode supply sections (122), the cathode supply sections (132) and/or the cooling device (140) is provided with at least one central conditioning device (160) for conditioning a media flow and has a control device (10) with the features of claim 10 or 11.

## Revendications

1. Procédé de commande d'au moins un dispositif de conditionnement central (160) destiné à conditionner un flux de fluide vers au moins deux piles à combustible (110) d'un système de piles à combustible (100), **caractérisé par** les étapes suivantes :
- spécification d'une consigne de paramètres de procédé (PPS),
- détection des valeurs réelles des paramètres de procédé (PPI) des au moins deux piles à combustible (110),
- détermination des écarts de paramètres de procédé (PPA) correspondant à la différence entre chaque valeur réelle détectée de paramètre de procédé (PPI) et la consigne de paramètres de procédé (PPS),
- spécification des pondérations (G) pour les écarts de paramètres de procédé (PPA) déterminés, et génération d'une somme de paramètres de procédé (PPT) basée sur les écarts de paramètres de procédé (PPA) et les pondérations (G) spécifiées,
- émission d'une entrée de commande (SV) vers le ou les dispositifs de conditionnement central (160) basée sur la somme de paramètres de procédé (PPT) générée.

2. Procédé de commande selon la revendication 1, comprenant en outre les étapes suivantes:
- détection d'un point de fonctionnement (BP) du système de pile à combustible (100),
- définition de pondérations (G) pour les écarts de paramètres de procédé (PPA) déterminés en fonction du point de fonctionnement détecté (BP).

3. Procédé de commande selon l'une des revendications précédentes, **caractérisé en ce que** les pondérations (G) sont spécifiées entre les limites 1,0 et 0,0.

4. Procédé de commande selon l'une des revendications précédentes, **caractérisé en ce que** la somme des pondérations prédéterminées (G) est constante ou sensiblement constante, indépendamment du point de fonctionnement détecté (BP).

5. Procédé de régulation selon l'une des revendications précédentes, **caractérisé en ce que** les pondérations (G) accordent une importance accrue aux faibles écarts de paramètres de processus (PPA) à un point de fonctionnement (BP) en situation de faible charge et une importance accrue aux écarts de paramètres de processus (PPA) plus importants à un point de fonctionnement (BP) en situation de forte charge.

6. Procédé de régulation selon l'une des revendications précédentes, **caractérisé en ce qu'**au moins un des paramètres de procédé suivants est utilisé :
- température du flux de fluide
- pression du flux de fluide
- débit massique du flux de fluide
- humidité relative du flux de fluide.

7. Procédé de commande selon l'une des revendications précédentes, **caractérisé en ce que** l'acquisition des valeurs réelles des paramètres de processus (PPI) est effectuée pour au moins trois piles à combustible (110), les écarts de paramètres de processus acquis (PPA) étant toujours soumis aux étapes de procédé supplémentaires par paires, et enfin la somme des paramètres de processus (PPT) étant générée sur la base d'une multiplication des sommes individuelles de paramètres de processus (PPT) par paires.

8. Procédé de commande selon l'une des revendications précédentes, **caractérisé en ce que** lors de la détermination des écarts de paramètres de processus (PPA), la direction qualitative de l'écart est négligée pour les étapes de processus ultérieures.

9. Procédé de régulation selon l'une des revendications précédentes, **caractérisé en ce qu'**au moins un des fluides suivants est pris en compte :
- gaz d'alimentation anodique (AZG)
- gaz d'alimentation cathodique (KZG)
- gaz de recirculation (RZG)
- liquide de refroidissement.

10. Dispositif de commande (10) permettant de commander au moins un dispositif de conditionnement central (160) pour le conditionnement d'un flux de fluide vers au moins deux piles à combustible (110) d'un système de piles à combustible (100), ou ce dispositif est **caractérisé par** un module de spécification (20) permettant de spécifier une consigne de paramètres de procédé (PPS), un module de détection (30) permettant de détecter les valeurs réelles des paramètres de procédé (PPI) des deux piles à combustible (110), un module de détermination (40) permettant de déterminer les écarts de paramètres de procédé (PPA) comme la différence entre chaque valeur réelle détectée (PPI) et la consigne de paramètres de procédé (PPS), un module de pondération (60) permettant de spécifier des pondérations (G) pour les écarts de paramètres de procédé (PPA) déterminés, et un module de génération (70) permettant de générer une somme de paramètres de procédé (PPT) basée sur les écarts de paramètres de procédé (PPA) et les pondérations (G) spécifiées, ainsi qu'un module de sortie (80) permettant de transmettre une spécification de commande (SV) au dispositif de conditionnement central (160) sur la base de la somme des paramètres de processus (PPT) générée, le module de spécification (20), le module de détection (30), le module de détermination (40), le module de pondération (60), le module de génération (70) et/ou le module de sortie (80) étant configurés pour exécuter un procédé de contrôle présentant les caractéristiques de l'une des revendications 1 à 9.

11. Dispositif de commande (10) selon la revendication 10, **caractérisé en ce qu'**un module de détection (50) est également prévu pour détecter un point de fonctionnement (BP) du système de pile à combustible (100), et le module de pondération (60) sert à spécifier des pondérations (G) pour les écarts de paramètres de processus (PPA) déterminés sur la base du point de fonctionnement (BP) détecté.

12. Produit de programme informatique comprenant des instructions qui, lorsqu'elles sont exécutées par un ordinateur, amènent l'ordinateur à exécuter les étapes d'un procédé de commande ayant des caractéristiques selon l'une quelconque des revendications 1 à 9.

13. Système de pile à combustible (100) pour la production d'énergie électrique, comprenant au moins deux empilements de piles à combustible (110), chacun doté d'un dispositif de refroidissement (140), d'une section anodique (120) et d'une section cathodique (130), où chaque section anodique (120) comporte une section d'alimentation anodique (122) pour l'alimentation en gaz anodique (AZG) et une section de décharge anodique (124) pour l'évacuation des gaz d'échappement anodique (AAG), où chaque section cathodique (130) comporte en outre une section d'alimentation cathodique (132) pour l'alimentation en gaz cathodique (KZG) et une section de décharge cathodique (134) pour l'évacuation des gaz d'échappement anodique (KAG), où il est **caractérisé en ce que** les sections d'alimentation anodique (122), cathodique (132) et/ou le dispositif de refroidissement (140) sont équipés d'au moins un dispositif de conditionnement central (160) pour le conditionnement d'un flux de fluide et d'un dispositif de commande (10) présentant les caractéristiques de la revendication 10 ou 11.
